# EUROPÄISCHE PATENTSCHRIFT

(11) **EP 1 203 372 B1**
(45) Veröffentlichungstag und Bekanntmachung des Hinweises auf die Patenterteilung: **30.07.2008**
(21) Anmeldenummer: 01911366.1
(22) Anmeldetag: 18.01.2001
(51) Int. Cl.: G11B 7/085

(54) **VERFAHREN ZUR DURCHFÜHRUNG EINES SPURSPRUNGS UND ABSPIELGERÄT**
METHOD FOR CARRYING OUT A TRACK JUMP AND PLAYBACK DEVICE
PROCEDE PERMETTANT D'EFFECTUER UN SAUT DE PISTE ET APPAREIL DE REPRODUCTION

(30) Priorität: 21.01.2000 DE 10002443
(43) Veröffentlichungstag der Anmeldung: 08.05.2002
(73) Patentinhaber: ROBERT BOSCH GMBH, 70442 Stuttgart (DE)
(72) Erfinder: ZIMMERMANN, Holger, 31141 Hildesheim (DE); BECKER, Volker, 31139 Hildesheim (DE); MAIER, Jens, 31180 Giesen (DE); BAAS, Dieter, 77694 Auenheim (DE)
(86) Internationale Anmeldenummer: PCT/DE2001/000199
(87) Internationale Veröffentlichungsnummer: WO 2001/054120

(56) Entgegenhaltungen:
- DE-A- 19 804 544
- US-A- 4 236 232
- US-A- 5 222 054
- PATENT ABSTRACTS OF JAPAN vol. 1997, no. 08, 29. August 1997 (1997-08-29) & JP 09 106637 A (SONY CORP), 22. April 1997 (1997-04-22)

## Beschreibung

### Stand der Technik

Die Erfindung geht von einem Verfahren zur Durchführung eines Spursprungs nach der Gattung des unabhängigen Anspruchs 1 und von einem Abspielgerät nach der Gattung des unabhängigen Anspruchs 4 aus.

Aus der GB 2 228 132 A ist bereits ein Steuersystem für eine Lesevorrichtung eines Plattenspielers bekannt. Dabei werden Positionsdaten, die die aktuelle Position einer Lesevorrichtung darstellen von einer Platte gelesen. Der Abstand der aktuellen Position zu der Ausgangsposition der Lesevorrichtung wird gemäß den gelesenen Positionsdaten berechnet. Die Lesevorrichtung wird gemäß des berechneten Abstands zur Ausgangsposition bewegt. Dazu wird aus dem ermittelten Abstand die für die Bewegung der Lesevorrichtung erforderliche Zeit zur Ansteuerung eines Transportmotors für die Lesevorrichtung bestimmt. Anschließend wird die Lesevorrichtung für die berechnete Zeit bewegt.

### Vorteile der Erfindung

Das erfindungsgemäße Verfahren mit den Merkmalen des unabhängigen Anspruchs 1 und das erfindungsgemäße Abspielgerät mit den Merkmalen des unabhängigen Anspruchs 4 hat demgegenüber den Vorteil, daß für einen Spursprung keine Positionsdaten von der Speicherplatte ausgelesen werden müssen, so daß ein Spursprung auch aus einem Zustand heraus möglich ist, bei dem die Speicherplatte nicht bewegt wird und keine Positionsdaten ausgelesen werden können. Dies kann beispielsweise der Startzustand sein. Auf diese Weise ergibt sich eine schnellere Zugriffszeit auf die vorgegebene Spur aus dem unbewegten Zustand, beispielsweise beim Starten der Speicherplatte. Da für einen Spursprung keine Positionsdaten von der Speicherplatte gelesen werden müssen, ist es für den gesamten Spursprungvorgang nicht erforderlich, die Speicherplatte zu bewegen bzw. in Rotation zu versetzen. Auf diese Weise wird Energie eingespart. Außerdem wird die Zeit eingespart, die für die Beschleunigung der Speicherplatte auf eine Drehzahl erforderlich ist, bei der Positionsdaten von der Speicherplatte ausgelesen werden könnten.

Durch die in den Unteransprüchen aufgeführten Maßnahmen sind vorteilhafte Weiterbildungen und Verbesserungen des im unabhängigen Anspruch 1 angegebenen Verfahrens bzw. des im unabhängigen Anspruch 4 angegebenen Abspielgerätes möglich.

Besonders vorteilhaft ist es, daß die ermittelte Zeit mit einem einstellbaren Korrekturfaktor multipliziert wird und daß die Lesevorrichtung für die auf diese Weise korrigierte Zeit in Richtung zu der vorgegebenen Spur bewegt wird. Auf diese Weise lassen sich Änderungen der Leichtgängigkeit der Bewegung der Lesevorrichtung ausgleichen, indem der Korrekturfaktor an die Änderungen der Leichtgängigkeit der Bewegung der Lesevorrichtung angepaßt wird.

Ein weiterer Vorteil besteht darin, daß nach Beendigung des Spursprungs von der Lesevorrichtung ausgelesene Positionsdaten mit für die vorgegebene Spur bekannten Positionsdaten verglichen werden und daß der Korrekturfaktor in Abhängigkeit einer Differenz zwischen den ausgelesenen und den bekannten Positionsdaten eingestellt wird. Auf diese Weise wird der Korrekturfaktor automatisch an die Leichtgängigkeit der Bewegung der Lesevorrichtung angepaßt. Der sich ergebende Selbstlerneffekt führt dazu, daß die Spursprünge der Lesevorrichtung mit der Zeit immer präziser ausgeführt werden, so daß eine automatische Optimierung der für die Spursprünge berechneten Sprungzeiten der Lesevorrichtung bewirkt wird.

### Zeichnung

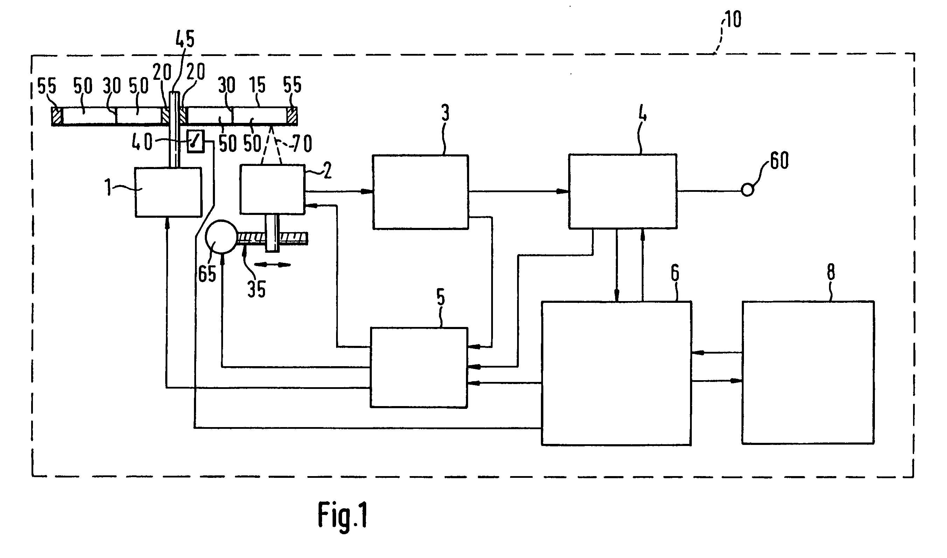

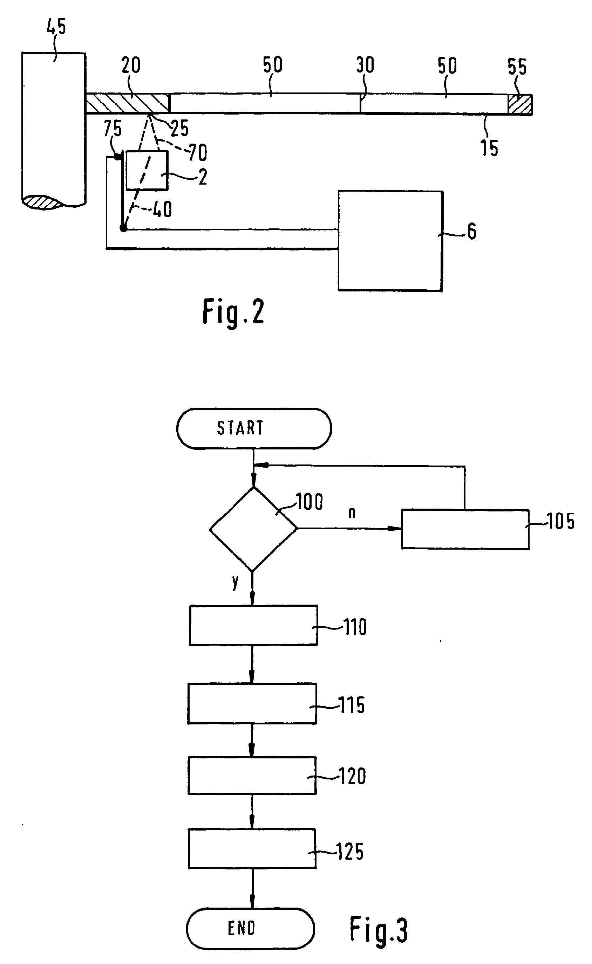

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Abspielgerätes, Figur 2 ein Detail des Blockschaltbildes gemäß Figur 1 und Figur 3 einen Ablaufplan für eine Steuerung des erfindungsgemäßen Abspielgerätes.

### Beschreibung des Ausführungsbeispiels

In Figur 1 kennzeichnet 10 ein beispielsweise als Compact-Disc-Spieler ausgebildetes Abspielgerät für optische Speicherplatten. Das Abspielgerät 10 umfaßt einen Antriebsmotor 1 zum rotatorischen Antrieb einer in das Abspielgerät 10 eingelegten, beispielsweise als Compact-Disc ausgebildeten optischen Speicherplatte 15 über eine Achse 45. Eine Lesevorrichtung 2 wird gemäß einem in Figur 1 dargestellten Doppelpfeil in radialer Richtung entlang einer Oberfläche der optischen Speicherplatte 15 mittels einer Positioniervorrichtung 35 geführt. Die Lesevorrichtung 2 ist über eine Detektionseinheit 3 und eine Signalverarbeitungseinheit 4 mit einer Steuereinheit 6 verbunden. Die Detektionseinheit 3, die Signalverarbeitungseinheit 4 und die Steuereinheit 6 sind jeweils an eine Servoeinheit 5 angeschlossen. Mit der Steuereinheit 6 ist eine Eingabe- und Anzeigeeinheit 8 verbunden. Die Servoeinheit 5 steuert den Antriebsmotor 1, die Positioniervorrichtung 35 und die Lesevorrichtung 2 an. Es ist weiterhin ein Schalter 40 vorgesehen, der in der Nähe einer Ausgangsposition 25 eines Einlaufbereichs 20 der optischen Speicherplatte 15 gemäß Figur 2 angeordnet ist. Der Schalter 40 ist ebenfalls mit der Steuereinheit 6 verbunden.

Die Speicherplatte 15 umfaßt drei Bereiche: einen Einlaufbereich 20, in dem ein als TOC (Table of Contents) bezeichnetes Inhaltsverzeichnis aufgezeichnet ist, ein Programmbereich 50, in dem Nutzdaten, beispielsweise Musiksignale aufgezeichnet sind, und einen Endbereich 55, in dem ein Programmendesignal aufgezeichnet ist. Diese drei Bereiche sind in der beschriebenen Reihenfolge radial von der Achse 45 im Inneren der Speicherplatte 15 nach außen hin auf der Speicherplatte 15 angeordnet. Das bedeutet, daß der Einlaufbereich 20 der innerste Bereich, der Endbereich 55 der äußerste Bereich der optischen Speicherplatte 15 ist und der Programmbereich 50 zwischen dem Einlaufbereich 20 und dem Endbereich 55 liegt. Im Inhaltsverzeichnis des Einlaufbereichs 20 sind beispielsweise die Anzahl von Programmdaten, beispielsweise von auf einer Compact-Disc aufgezeichneten Musiktiteln, die Adressen bzw. Startpositionen der Programmdaten auf der Speicherplatte 15 und die Gesamtabspielzeit aller auf der Speicherplatte 15 aufgezeichneten Programmdaten abgelegt. Dabei können die Inhaltsdaten wiederholt im Einlaufbereich 20 der Speicherplatte 15 bis zur Startposition des Programmbereichs 50 aufgezeichnet sein. Die Nutzdaten, bei einer Compact-Disc beispielsweise die Musikdaten, die im Programmbereich 50 aufgezeichnet sind, umfassen eine Vielzahl von Rahmen. Jeder Rahmen umfaßt ein Synchronisationssignal, einen Subcode von Steuerdaten, Datenbits von Nutzsignalen, beispielsweise Musiksignalen und Fehlerkorrekturbits für die Fehlerkorrektur in den Datenbits. Die Subcodes umfassen ferner Adressdaten.

Die Lesevorrichtung 2 liest die auf der Speicherplatte 15 aufgezeichneten Daten optisch aus und führt eine optoelektrische Umwandlung der ausgelesenen Signale durch. Das auf diese Weise gewonnene elektrische Aufzeichnungssignal wird der Detektionseinheit 3 zugeführt. Von dort wird das Aufzeichnungssignal an die Signalverarbeitungseinheit 4 weitergeleitet. Weiterhin liefert die Detektionseinheit 3 Fehlersignale, wie beispielsweise ein Fokusfehlersignal und ein Spurfehlersignal an die Servoeinheit 5. In der Signalverarbeitungseinheit 4 wird das Aufzeichnungssignal in ein digitales Signal umgeformt, um das Synchronisationssignal zu detektieren, das Nutzdatensignal, d. h. in diesem Beispiel das Musiksignal zu demodulieren und den Subcode zu detektieren. Das Nutzdaten- bzw. Musiksignal wird einer Digital-/ Analogwandlung unterzogen, so daß es als analoges Audiosignal an einem Ausgang 60 der Signalverarbeitungseinheit 4 ausgegeben werden kann. Ein Teil des Synchronisationssignals wird von der Signalverarbeitungseinheit 4 an die Servoeinheit 5 abgegeben und der Subcode wird von der Signalverarbeitungseinheit 4 zur Steuereinheit 6 weitergeleitet.

In Antwort auf das Fehlersignal von der Detektionseinheit 3, auf das Synchronisationssignal der Signalverarbeitungseinheit 4 und auf Steuersignale der Steuereinheit 6 gibt die Servoeinheit 5 Servosignale für einen Fokusservomechanismus, einen Spurservomechanismus und an die Positioniervorrichtung 35 ab. Dabei wird beim Fokusservomechanismus eine Fokusspule der Lesevorrichtung 2 so angesteuert, daß ein Lichtstrahl 70 von der Lesevorrichtung 2 auf einer reflektierenden Oberfläche der Speicherplatte 15 fokussiert wird. Entsprechend wird beim Spurservomechanismus eine Spurspule der Lesevorrichtung 2 so angesteuert, daß der Lichtstrahl 70 auf eine auszulesende Spur gerichtet wird. Entsprechend wird ein Beförderungsmotor 65 der Positioniervorrichtung 35 so angesteuert, daß die Lesevorrichtung 2 radial entlang der Oberfläche der Speicherplatte 15 bewegt wird. Schließlich gibt die Servoeinheit 5 auch Servosignale für einen CLV-Servomechanismus (Constant Linear Velocity) ab, der den Antriebsmotor 1 linear bei einer konstanten Geschwindigkeit antreibt.

Die Steuereinheit 6 ist als Mikrocomputer ausgebildet, der die Steuersignale zur Steuerung der oben beschriebenen verschiedenen Einheiten des Abspielgerätes 10 abgibt.

Die Eingabe-/ Anzeigeeinheit 8 kann auch nur als Eingabeeinheit ausgebildet sein und ermöglicht die Eingabe einer Adresse einer Datengruppe einer in das Abspielgerät 10 eingelegten Speicherplatte 15. Dies kann beispielsweise die Anfangsadresse eines Musiktitels sein. Dabei kann die Anfangsadresse eines Titels beispielsweise über die Titelnummer an einer Zehnertastatur der Eingabe-/Anzeigeeinheit 8 eingegeben werden. Beim erstmaligen Auslesen des Inhaltsverzeichnisses im Einlaufbereich 20 werden die Inhaltsdaten in einem in Figur 1 nicht dargestellten Speicher abgelegt, der der Steuereinheit 6 zugeordnet und in diese integriert oder mit ihr verbunden ist. Der Speicher kann dabei auch außerhalb des Abspielgerätes 10 angeordnet sein und ist dann über eine geeignete Schnittstelle mit dem Abspielgerät 10 bzw. der Steuereinheit 6 des Abspielgerätes 10 zu verbinden. Durch Vergleich der Titelnummerneingabe an der Eingabe-/Anzeigeeinheit 8 mit den im Speicher abgelegten Inhaltsdaten läßt sich so mit der Steuereinheit 6 eine gewünschte Zieladresse vorgeben, an die die Lesevorrichtung 2, bzw. der Lichtstrahl 70 der Lesevorrichtung 2 auf der Speicherplatte 15 bewegt werden soll. Aus dieser Zieladresse läßt sich eine vorgegebene Spur 30 in der Steuereinheit 6 ermitteln, deren Positionsdaten auf der Speicherplatte 15 in Form der Zieladresse bekannt sind und über die Inhaltsdaten im Speicher abgelegt sind.

Die Daten der Speicherplatte 15 sind in einer Spirale aufgezeichnet. Aufgrund der Spurbreite und der geringen Steigung der Spirale spricht man jedoch von einzelnen Spuren, so daß man sich die Daten in konzentrischen Ringen auf der Speicherplatte 15 aufgezeichnet vorstellen kann. Um von Spur zu Spur zu wechseln gibt es zwei Möglichkeiten. Zum einen gibt es als grob einstellende Einheit die Positioniervorrichtung 35, auf der sich die Lesevorrichtung 2 mit einer in den Figuren nicht dargestellten optischen Abtasteinheit, die den Lichtstrahl 70 zur optischen Abtastung der auf der Speicherplatte 15 aufgezeichneten Daten erzeugt, befindet. Die Lesevorrichtung 2 wird mit Hilfe des Beförderungsmotors 65 der Positioniervorrichtung 35 in radialer Richtung über die Oberfläche der Speicherplatte 15 bewegt. Eine fein einstellende Einheit ist als frei beweglich in einem Magnetfeld aufgehängte Linse der optischen Abtasteinheit ausgebildet. Dabei kann diese in den Figuren ebenfalls nicht abgebildete Linse senkrecht zur Speicherplatte 15 mittels des Fokusservomechanismus bzw. entsprechend der Ansteuerung der dieses Magnetfeld beeinflussenden Fokusspule des Fokusservomechanismus bewegt werden. Außerdem kann die Linse der optischen Abtasteinheit senkrecht zu den Spuren durch entsprechende Ansteuerung der ebenfalls dieses Magnetfeld beeinflussenden Spurspule des Spurservomechanismus bewegt werden. Damit ist ein Bereich von zur Zeit etwa 600 Spuren abgedeckt.

Ist nun ein Sprung von einer aktuell abgetasteten Spur auf der Speicherplatte 15 zu einer beispielsweise an der Eingabe-/ Anzeigeeinheit 8 vorgegebenen Spur 30 im Programmbereich 50 der Speicherplatte 15 gefordert, so errechnet sich aus der Differenz der aktuellen Spur und der vorgegebenen Spur 30 eine Spuranzahl, die übersprungen werden muß. Der Antriebsmotor 1 von als Compact-Disc-Spieler ausgebildeten Abspielgeräten 10 zur Musikwiedergabe laufen je nach Position der Lesevorrichtung 2 in radialer Richtung entlang der Oberfläche der Speicherplatte 15 und je nach Gesamtspielzeit der Speicherplatte 15 mit einer Umdrehungsgeschwindigkeit von zur Zeit beispielsweise zwischen etwa 3,3 Umdrehungen pro Sekunde und etwa 4,5 Umdrehungen pro Sekunde. Diese Umdrehungsgeschwindigkeit begrenzt die kontrollierbare translatorische Geschwindigkeit der Lesevorrichtung 2 in radialer Richtung entlang der Oberfläche der Speicherplatte 15, da sich der Lichtstrahl 70 zum Spurenzählen für eine Mindestzeit auf den Datenspuren befinden muß, um die entsprechenden Informationen aus den Datenspuren auszulesen. Dies ergibt eine obere translatorische Geschwindigkeitsgrenze. Weiterhin ist zum Abtasten und Auslesen der Datenspuren mittels des Lichtstrahls 70 eine Mindestdrehgeschwindigkeit der Speicherplatte 15 erforderlich, so daß es auch eine untere Geschwindigkeitsgrenze der Speicherplatte 15 gibt, ab der erst die Spuren gezählt werden können. Dies kommt besonders dann zum Tragen, wenn beim Beginn des Abspielvorgangs der Speicherplatte 15, d. h. beim Erhöhen der Drehgeschwindigkeit der Speicherplatte 15 von Null zur unteren Geschwindigkeitsgrenze zu einer vorgegebenen Spur 30 gesprungen werden soll. In diesem Fall wird die Zugriffszeit auf die vorgegebene Spur durch die Zeit bis zum Erreichen der unteren Geschwindigkeitsgrenze verzögert. Diese Verzögerung wird erfindungsgemäß dadurch umgangen, daß eine kontrollierbare Verschiebung der Lesevorrichtung 2 in radialer Richtung entlang der Oberfläche der Speicherplatte 15 beschrieben wird, die keine Auswertung bzw. Abtastung von in den Datenspuren aufgezeichneten Informationen erfordert. Die gleiche Problematik tritt auch in Pausensituationen auf, in denen zur Reduzierung der Verlustleistung zumindest der Antriebsmotor 1 inaktiv ist. Auch in diesem Fall muß die Speicherplatte 15 erst auf eine bestimmte Mindestdrehzahl, die durch die untere Geschwindigkeitsgrenze bestimmt ist, gebracht werden, bevor mit dem Spurenzählen begonnen werden kann, wodurch die effektive Zugriffszeit auf die vorgegebene Spur 30 verlängert wird.

Erfindungsgemäß wird somit vorgeschlagen, die zurückzulegende Strecke von einer aktuellen Spur zu der vorgegebenen Spur 30 nicht anhand der Spuranzahl, sondern anhand der Zeit zu berechnen, die für den Spursprung der Lesevorrichtung 10 benötigt wird. Dabei wird folgendermaßen vorgegangen:

Bei Anforderung eines Spursprungs seitens eines Benutzers, beispielsweise durch entsprechende Eingabe an der Eingabe-/Anzeigeeinheit 8 von der aktuell durch den Lichtstrahl 70 abgetasteten Spur zu einer beispielsweise ebenfalls an der Eingabe-/ Anzeigevorrichtung 8, beispielsweise in Form einer Titelnummernangabe vorgegebenen Spur 30, die für das gewählte Beispiel die Anfangsadresse des gewählten Titels bzw. einer gewählten Datengruppe darstellt, wird die Lesevorrichtung 2 durch die entsprechend von der Steuereinheit 6 angesteuerte Positioniervorrichtung 35 so lange in Richtung des Einlaufbereichs 20 der Speicherplatte 15 bewegt, bis der Schalter 40 gemäß Figur 2 betätigt wird, d. h. von einer in Figur 2 gestrichelt dargestellten ersten Schalterstellung in eine zweite Schalterstellung gebracht wird, die gemäß dem Beispiel nach Figur 2 **dadurch gekennzeichnet** ist, daß eine Kontaktierung eines Schaltkontakts 75 erfolgt. Durch Schließen eines entsprechenden Stromkreises wird in der Steuereinheit 6 die Betätigung des Schalters 40 detektiert. Der Lichtstrahl 70 der Lesevorrichtung 2 befindet sich dabei in der Ausgangsposition 25 des Einlaufbereichs 20 der optischen Speicherplatte 15 gemäß Figur 2, in der gleiche Bezugszeichen gleiche Elemente wie in Figur 1 kennzeichnen. Die Steuereinheit 6 ermittelt aus der vorgegebenen Spur 30 die für den Spursprung aus der Ausgangsposition 25 zu dieser vorgegebenen Spur 30 erforderliche Zeit. Dabei wird für den Spursprung aus der Ausgangsposition 25 zu der vorgegebenen Spur 30 zunächst eine Standardeinschaltzeit für die Bewegung der Lesevorrichtung 2 mittels der Positioniervorrichtung 35 ermittelt, die dann gegebenenfalls mit einem von vorhergehenden Sprüngen bekannten Korrekturfaktor multipliziert wird. Für die Berechnung der Standardeinschaltzeit wird dabei ein zuvor festgelegter Quotient aus der zum Überspringen einer Anzahl von Spuren erforderlichen Zeit zu dieser Anzahl von Spuren ermittelt und mit der sich aus der Differenz zwischen der vorgegebenen Spur 30 und der Ausgangsposition 25 ergebenden zu überspringenden Spuranzahl multipliziert. Daraus ergibt sich die Dauer des zur Ansteuerung des Beförderungsmotors 65 erforderlichen Motorantriebsimpulses, um die Lesevorrichtung 2 um die gewünschte Anzahl von Spuren radial entlang der Oberfläche der Speicherplatte 15 in Richtung zu der vorgegebenen Spur 30 mittels der Positioniervorrichtung 35 zu bewegen. Dabei liefert die Steuereinheit 6 den entsprechenden Motorantriebsimpuls mit der ermittelten erforderlichen Zeitdauer an den Beförderungsmotor 65. Durch die Korrektur der von der Steuereinheit 6 ermittelten Sprungzeit mit einem einstellbaren Korrekturfaktor können Änderungen in der Leichtgängigkeit der Bewegung der Lesevorrichtung 2 sowie die Tatsache, daß die Ausgangsposition 25 im allgemeinen nur ungefähr innerhalb des Einlaufbereichs 20 eingehalten werden kann, ausgeglichen werden, indem der Korrekturfaktor entsprechend angepaßt wird. Die Positioniervorrichtung 35 bewegt dann die Lesevorrichtung 2 für die auf diese Weise korrigierte Zeit in Richtung zu der vorgegebenen Spur 30. Eine Anpassung des Korrekturfaktors kann dabei dadurch erfolgen, daß die Steuereinheit 6 nach Beendigung des Spursprungs von der Lesevorrichtung 2 ausgelesene Positionsdaten mit den für die vorgegebene Spur 30 bekannten Positionsdaten vergleicht und daß die Steuereinheit 6 den Korrekturfaktor in Abhängigkeit der Differenz zwischen den ausgelesenen und den bekannten Positionsdaten einstellt. Auf diese Weise läßt sich die Differenz zwischen den ausgelesenen und den bekannten Positionsdaten bei weiteren Spursprüngen kontinuierlich verringern, so daß ein Selbstlerneffekt erzielt wird, bei dem das System mit der Zeit lernt, die Sprünge immer präziser auszuführen. Mittels des einstellbaren und an die äußeren Bedingungen anpaßbaren Korrekturfaktors ist somit eine automatische Optimierung der Präzision der Spursprünge mit der Zeit möglich. Voraussetzung zum Auslesen der Positionsdaten nach Beendigung des Spursprungs ist natürlich, daß die Drehzahl der Speicherplatte 15 die untere Geschwindigkeitsgrenze zumindest erreicht hat.

Das erfindungsgemäße Verfahren kann selbstverständlich mit bereits bekannten Verfahren kombiniert werden, bei denen Spursprünge anhand ausgelesener Positionsdaten der aktuellen Spur durchgeführt werden, wobei für diese Verfahren eine Drehzahl für die Speicherplatte 15 vorauszusetzen ist, die oberhalb der erforderlichen, bereits beschriebenen unteren Geschwindigkeitsgrenze liegt.

Durch das erfindungsgemäße Verfahren ist jedoch ein Spursprung in seiner Zeitdauer auch nicht durch die beschriebene obere translatorische Geschwindigkeitsgrenze beeinträchtigt, da für den Spursprung selbst keine Positionsdaten ausgelesen werden müssen.

Die Leichtgängigkeit der Bewegung der Lesevorrichtung 2 kann beispielsweise durch äußere Einflüsse, wie Temperatur, Abnutzung, usw. verändert werden.

In Figur 3 ist ein Ablaufplan für die Funktionsweise der Steuereinheit 6 dargestellt. Bei einem Programmpunkt 100 wird geprüft, ob der Schalter 40 betätigt wurde. Ist dies der Fall, so wird zu Programmpunkt 110 verzweigt, andernfalls wird zu Programmpunkt 105 verzweigt. Bei Programmpunkt 105 veranlaßt die Steuereinheit 6 den Beförderungsmotor 65 der Positioniervorrichtung 35 die Lesevorrichtung 2 zum Inneren der Speicherplatte 15 in Richtung zu der Achse 45 zu bewegen. Anschließend wird zu Programmpunkt 100 zurückverzweigt. Bei Programmpunkt 110 berechnet die Steuereinheit 6 die erforderliche Sprungzeit für die Lesevorrichtung 2 zum Erreichen der vorgegebenen Spur 30. Bei Programmpunkt 115 multipliziert die Steuereinheit 6 die bei Programmpunkt 110 berechnete Zeit mit dem Korrekturfaktor. Bei Programmpunkt 120 veranlaßt die Steuereinheit 6 den Beförderungsmotor 65 der Positioniervorrichtung 35 mittels eines Motorantriebsimpulses zur Bewegung der Lesevorrichtung 2 in Richtung zu der vorgegebenen Spur 30 für die bei Programmpunkt 115 korrigierte Zeitdauer. Bei Programmpunkt 125 ist der Spursprung beendet und der Lichtstrahl 70 der Lesevorrichtung 2 fokussiert die am Ende dieses Spursprungs erreichte Spur. Die aus der am Ende des Spursprungs erreichten Spur durch die Lesevorrichtung 2 ausgelesenen Positionsdaten vergleicht die Steuereinheit 6 mit den für die vorgegebene Spur 30 bekannten Positionsdaten und stellt den Korrekturfaktor in Abhängigkeit der Differenz zwischen den ausgelesenen und den bekannten Positionsdaten so ein, daß eine Multiplikation der bei Programmpunkt 110 ermittelten Sprungzeit mit dem bei Programmpunkt 125 neu eingestellten Korrekturfaktor zu einer Sprungzeit führt, bei der ein Spursprung der Lesevorrichtung 2 von der Ausgangsposition 25 in Richtung zur vorgegebenen Spur 30 zu einer Fokussierung der vorgegebenen Spur 30 durch den Lichtstrahl 70 geführt hätte. Nach Programmpunkt 125 wird der Programmteil verlassen.

Der jeweils aktuelle Korrekturfaktor und die Standardeinschaltdauer können ebenfalls in dem in den Figuren nicht dargestellten Speicher oder anderweitig abgespeichert werden. Der Speicher kann beispielsweise als Schreib-/Lesespeicher ausgebildet sein.

Für den bei der Anpassung des Korrekturfaktors bei Programmpunkt 125 vorausgesetzten Auslesevorgang von der Speicherplatte 15 ist wie bereits beschrieben mindestens eine Drehzahl der Speicherplatte 15 entsprechend der unteren Geschwindigkeitsgrenze erforderlich, wozu die Steuereinheit 6 den Antriebsmotor 1 spätestens bei Programmpunkt 125 entsprechend anzusteuern hat. Ist bei Programmpunkt 125 die Drehzahl der Speicherplatte 15 noch nicht im erforderlichen Geschwindigkeitsbereich, so sollte der Lichtstrahl 70 mindestens so lange auf der am Ende des Spursprungs erreichten Spur fokussiert werden, bis ein Auslesen der Positionsdaten dieser Spur und damit eine Angleichung des Korrekturfaktors möglich ist.

Um vor allem nach Pausensituationen bzw. beim Abspielstart der Speicherplatte 15 keine Zeit zu verlieren, sollte die Steuereinheit 6 zeitgleich mit der Einleitung des Spursprungs auch das Erhöhen der Drehzahl der Speicherplatte 15 veranlassen, so daß die Drehzahl der Speicherplatte 15 bei Beendigung des Spursprungs bereits im für das Auslesen von Positionsdaten erforderlichen Geschwindigkeitsbereich liegt.

Das erfindungsgemäße Verfahren läßt sich für beliebige optische Speicherplatten 15, beispielsweise auch für CD-ROM's anwenden. Dasselbe gilt auch für das Abspielgerät 10, das nicht auf Compact-Disc-Spieler beschränkt ist, sondern generell als Abspielgerät für optische Speicherplatten, also beispielsweise auch als CD-ROM-Laufwerk ausgebildet sein kann.

## Patentansprüche

1. Verfahren zur Durchführung eines Spursprungs einer Lesevorrichtung (2) zwischen einer aktuellen Spur und einer vorgegebenen Spur (30) einer in ein Abspielgerät (10) eingelegten optischen Speicherplatte (15), wobei für den Spursprung der Lesevorrichtung (2) in Abhängigkeit der dabei zu überspringenden Spuren eine Zeit ermittelt wird und die Lesevorrichtung (2) für die ermittelte Zeit in Richtung zu der vorgegebenen Spur (30) bewegt wird, **dadurch gekennzeichnet, daß** die Lesevorrichtung (2) bei Anforderung eines Spursprungs solange in Richtung zu einem Einlaufbereich (20) der optischen Speicherplatte (15) bewegt wird, bis eine Ausgangsposition (25) detektiert wird und daß aus der vorgegebenen Spur (30) die für den Spursprung aus der Ausgangsposition (25) zu dieser Spur (30) erforderliche Zeit ermittelt wird.

2. Verfahren nach Anspruch 1, **dadurch gekennzeichnet, daß** die ermittelte Zeit mit einem einstellbaren Korrekturfaktor multipliziert wird und daß die Lesevorrichtung (2) für die auf diese Weise korrigierte Zeit in Richtung zu der vorgegebenen Spur (30) bewegt wird.

3. Verfahren nach Anspruch 2, **dadurch gekennzeichnet, daß** nach Beendigung des Spursprungs von der Lesevorrichtung (2) ausgelesene Positionsdaten mit für die vorgegebene Spur (30) bekannten Positionsdaten verglichen werden und daß der Korrekturfaktor in Abhängigkeit einer Differenz zwischen den ausgelesenen und den bekannten Positionsdaten eingestellt wird.

4. Abspielgerät (10) für optische Speicherplatten (15) mit einer Positioniervorrichtung (35) und einer Lesevorrichtung (2) zum Auslesen von Datenspuren einer optischen Speicherplatte (15), wobei für einen Spursprung der Lesevorrichtung (2) mittels der Positioniervorrichtung (35) von einer aktuellen Spur zu einer vorgegebenen Spur (30) in Abhängigkeit der dabei zu überspringenden Spuren in einer Steuereinheit (6) eine Zeit ermittelt wird und die Positioniervorrichtung (35) die Lesevorrichtung (2) für die ermittelte Zeit in Richtung zu der vorgegebenen Spur (30) bewegt, **dadurch gekennzeichnet, daß** ein Schalter (40) in der Nähe einer Ausgangsposition (25) eines Einlaufbereichs (20) der optischen Speicherplatte (15) angeordnet ist, daß die Positioniervorrichtung (35) bei Anforderung eines Spursprungs die Lesevorrichtung (2) solange in Richtung zu dem Einlaufbereich (20) bewegt, bis der Schalter (40) betätigt wird und daß die Steuereinheit (6) aus der vorgegebenen Spur (30) die für den Spursprung aus der Ausgangsposition (25) zu dieser Spur (30) erforderliche Zeit ermittelt.

5. Abspielgerät (10) nach Anspruch 4, **dadurch gekennzeichnet, daß** die Steuereinheit (6) die ermittelte Zeit mit einem einstellbaren Korrekturfaktor multipliziert und daß die Positioniervorrichtung (35) die Lesevorrichtung (2) für die auf diese Weise korrigierte Zeit in Richtung zu der vorgegebenen Spur (30) bewegt.

6. Abspielgerät (10) nach Anspruch 5, **dadurch gekennzeichnet, daß** die Steuereinheit (6) nach Beendigung des Spursprungs von der Lesevorrichtung (2) ausgelesene Positionsdaten mit für die vorgegebene Spur (30) bekannten Positionsdaten vergleicht und daß die Steuereinheit (6) den Korrekturfaktor in Abhängigkeit einer Differenz zwischen den ausgelesenen und den bekannten Positionsdaten einstellt.

## Claims

1. Method for carrying out a track jump of a reading device (2) between a current track and a predefined track (30) of an optical storage disc (15) which is inserted into a playback device (10), wherein a time is determined for the track jump of the reading device (2) as a function of the tracks which are to be jumped in this context, and the reading device (2) is moved in the direction of the predefined track (30) for the determined time, **characterized in that,** when a track jump is requested, the reading device (2) is moved in the direction of a run-in region (20) of the optical storage disc (15) until a starting position (25) is detected, and **in that** the predefined track (30) is used to determine the time necessary for the track jump from the starting position (25) to this track (30).

2. Method according to Claim 1, **characterized in that** the determined time is multiplied by an adjustable correction factor, and **in that** the reading device (2) is moved in the direction of the predefined track (30) for the time which has been corrected in this way.

3. Method according to Claim 2, **characterized in that,** after the track jump has ended, position data which is read out by the reading device (2) are compared with position data which are known for the predefined track (30), and **in that** the correction factor is set as a function of a difference between the read-out position data and the known position data.

4. Playback device (10) for optical storage discs (15) having a positioning device (35) and a reading device (2) for reading out data tracks of an optical storage disc (15), wherein, for a track jump of the reading device (2) from a current track to a predefined track (30) by means of the positioning device (35), a time is determined in a control unit (6) as a function of the tracks which are to be jumped in this context, and the positioning device (35) moves the reading device (2) in the direction of the predefined track (30) for the determined time, **characterized in that** a switch (40) is arranged in the vicinity of a starting position (25) of a run-in region (20) of the optical storage disc (15), **in that**, when a track jump is requested, the positioning device (35) moves the reading device (2) in the direction of the run-in region (20) until the switch (40) is activated, and **in that** the control unit (6) uses the predefined track (30) to determine the time which is necessary for the track jump from the starting position (25) to this track (30).

5. Playback device (10) according to Claim 4, **characterized in that** the control unit (6) multiplies the determined time by an adjustable correction factor, and **in that** the positioning device (35) moves the reading device (2) in the direction of the predefined track (30) for the time which has been corrected in this way.

6. Playback device (10) according to Claim 5, **characterized in that,** after the end of the track jump, the control unit (6) compares position data which have been read out by the reading device (2) with position data which are known for the predefined track (30), and **in that** the control unit (6) sets the correction factor as a function of a difference between the read-out position data and the known position data.

## Revendications

1. Procédé pour effectuer un saut de pistes dans un dispositif de lecture (2) entre une piste utilisée actuellement et une piste prédéfinie (30) d'un disque d'enregistrement optique (15) placé dans un appareil de lecture (10),
et pour le saut de pistes du dispositif de lecture (2) en fonction des pistes à passer, on détermine une durée et le dispositif de lecture (2) se déplace en direction de la piste prédéfinie (30) pendant la durée déterminée,
**caractérisé en ce que**
à la demande d'un saut de pistes, le dispositif de lecture (2), se déplace dans la direction d'une zone d'entrée (20) du disque optique (15) jusqu'à détecter une position de sortie (25) et
à partir de la piste prédéfinie (30) on détermine le temps nécessaire au saut de pistes à partir de la position de départ (25) jusqu'à cette piste (30).

2. Procédé selon la revendication 1,
**caractérisé en ce que**
le temps déterminé est multiplié d'un coefficient de correction réglable et
le dispositif de lecture (2) est déplacé en direction de la piste prédéfinie (30) pendant cette durée corrigée.

3. Procédé selon la revendication 2,
**caractérisé en ce qu'**
à la fin du saut de pistes par le dispositif de lecture (2), les données de position lues sont comparées aux données de position connues de la piste prédéfinie (30) et
on règle le coefficient de correction en fonction des différences entre les données de position lues et les données de position connues.

4. Appareil lecteur (10) pour des disques d'enregistrement optique (15) comportant un dispositif de positionnement (35) et un dispositif de lecture (2) pour lire les pistes de données d'un disque d'enregistrement optique (15),
et pour un saut de pistes du dispositif de lecture (2), à l'aide du dispositif de positionnement (35), on détermine dans une unité de commande (6), le temps entre la piste actuelle et la piste prédéfinie (30) en fonction du nombre de pistes à sauter, et le dispositif de positionnement (35) déplace le dispositif de lecture (2) pour la durée déterminée en direction de la piste prédéfinie (30),
**caractérisé par**
un commutateur (40) prévu à proximité de la position de départ (25) d'une zone d'entrée (20) du disque d'enregistrement optique (15),
à la demande d'un saut de pistes, le dispositif de positionnement (35), déplace le dispositif de lecture (2) en direction de la zone d'entrée (20) jusqu'à ce que le commutateur (40) soit actionné et
à partir de la piste prédéfinie (30), l'unité de commande (16) détermine le temps nécessaire au saut de pistes à partir de la position de départ (25) jusqu'à cette piste (30).

5. Appareil de lecture (10) selon la revendication 4,
**caractérisé en ce que**
l'unité de commande (6) multiplie le temps déterminé par un coefficient de correction réglable et
le dispositif de positionnement (35) déplace le dispositif de lecture (2) en direction de la piste prédéfinie (30) pendant la durée corrigée de cette manière.

6. Appareil de lecture (10) selon la revendication 5,
**caractérisé en ce qu'**
après le saut de pistes, l'unité de commande compare les données de position lues par le dispositif de lecture (2) aux données de position connues pour la piste prédéfinie (30) et
en fonction de la différence entre les données de position lues et les données de position connues, l'unité de commande (10) détermine le coefficient de correction.
